Europäisches Patentamt

European Patent Office

Office européen des brevets

(19)

(11) **EP 0 813 332 A1**

## (12) EUROPEAN PATENT APPLICATION

(43) Date of publication:
**17.12.1997 Bulletin 1997/51**

(51) Int Cl.6: **H04M 15/28, H04M 15/00**

(21) Application number: **97304086.8**

(22) Date of filing: **11.06.1997**

| | |
|---|---|
| (84) Designated Contracting States:<br>**AT BE CH DE DK ES FI FR GB GR IE IT LI LU MC<br>NL PT SE**<br><br>(30) Priority: **11.06.1996 JP 148841/96**<br><br>(71) Applicant: **NEC CORPORATION<br>Tokyo (JP)** | (72) Inventor: **Kameyama, Hidehiko<br>Kodama-gun, Saitama (JP)**<br><br>(74) Representative: **Vleck, Jan Montagu<br>Reddie & Grose,<br>16 Theobalds Road<br>London WC1X 8PL (GB)** |

(54) **Call charges notification in a radio telephone**

(57)    A mobile radio telephone receives information concerning a telephone calling charge from a base station, and calculates a telephone call charge based on the received information. The mobile radio telephone also stores a predetermined threshold charge indicating start of charge notification, and performs charge notification if the calculated telephone call charge is equal to or exceeds the predetermined threshold charge. The mobile radio telephone may decide that the charge notification is performed or not.

FIG. 4

EP 0 813 332 A1

## Description

The present invention relates to a mobile radio telephone, and more particularly to a mobile radio telephone capable of informing a mobile caller of an accrued telephone call charge.

Known mobile radio telephones receive telephone call charge information sent from a base station after the mobile caller terminates the telephone call. Thus, the mobile radio telephone confirms the telephone call charge shown on a display only after termination of the call.

However, the conventional mobile radio telephone has a problem in that the mobile caller can not keep track of the accrued telephone call charge during the call, because the telephone call charge is displayed only after the termination of the call.

In order to solve above-mentioned problem, for example, Japanese patent laid-open No. S63-244963 (reference 1) of October 23, 1988 discloses a telephone using an alarm sound instead of a display of information when a speaking time specified by a user expires.

Further, Japanese patent laid-open No. H4-168864 (reference 2) of June 17, 1997 discloses a traditional wire-based telephone system in which each extension telephone sounds an alarm sound when a telephone call charge specified by a caller, e.g., 100 yen, is accrued. The charge is calculated by a central telephone exchange, to which each extension telephone is connected by wire.

However, the telephone disclosed in reference 1 can inform the mobile caller only of elapsed speaking time. Thus, it is impossible to provide telephone call charge information.

Further, the traditional wire-based telephone system disclosed in reference 2 is, however, complicated because the central telephone exchange of the telephone system provides the telephone call charge. Clearly, this system does not suit a mobile radio telephone. Moreover, if the alarm sound is generated every time a telephone call is made, it is offensive to the caller who does not care about the telephone call charge.

Embodiments of the present invention provide a mobile radio telephone capable of providing telephone call charge information to a mobile telephone caller.

Embodiments of the present invention also provide a mobile radio telephone capable of confirming whether the charge notification system is ON or OFF before starting a telephone call.

According to the present invention, there is provided a mobile radio telephone including a receiving circuit for receiving information concerning telephone calling charge from a base station, and a calculation circuit for calculating a telephone call charge based on the received information. Mobile radio telephones embodying the invention may also include a memory for storing a predetermined threshold charge, indicating start of charge notification, and a charge notification circuit for performing charge notification if the calculated telephone call charge is equal to or exceeds said predetermined threshold charge.

Embodiments of the mobile radio telephone of the present invention may include a control circuit for deciding whether the charge notification is performed or not.

With above-mentioned arrangement, a mobile caller selects whether the charge notification is performed or not before starting a tele- phone call, a threshold charge for performing the charge notification is specified if the charge notification is selected, and the charge notification is performed when the telephone call charge calculated by the mobile radio telephone itself is equal to or exceeds the threshold charge specified by the mobile caller after starting the telephone call.

Embodiments of the invention will now be described with reference to the accompanying drawings, in which:

Fig. 1 is a block diagram showing the function of the mobile radio telephone in accordance with a preferred embodiment of the present invention;
Fig. 2 is a block diagram showing the function of the radio circuit of the mobile radio telephone illustrated in Fig. 1;
Fig. 3 is a block diagram showing the function of the controller of the mobile radio telephone illustrated in Fig. 1;
Fig. 4 is a flowchart for explaining the operation of a calculation of the telephone call charge;
Fig. 5 is a front view showing the mobile radio telephone illustrated in Fig. 1;
Fig. 6 is a front view showing the key pad portion illustrated in Fig. 1;
Fig. 7 (a)-Fig. 7(f) are views of the display, illustrated in Fig. 1, for explaining a manner of setting charge notification and threshold charge; and
Fig. 8 is a flowchart for explaining the operation of the mobile radio telephone illustrated in Fig. 1.

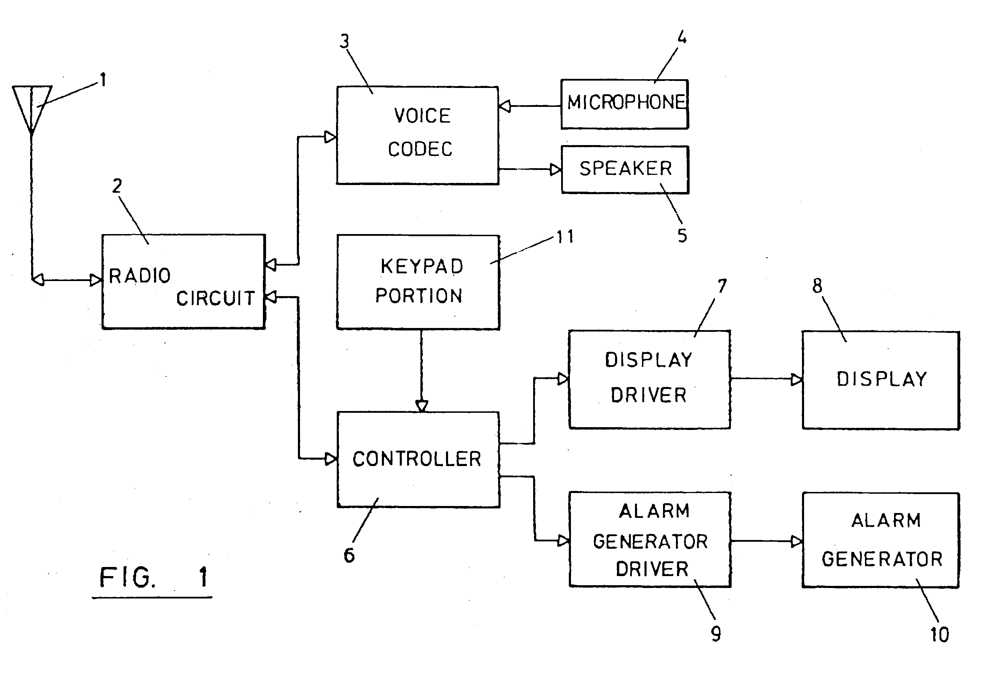

In Fig.1, an antenna 1 outputs a received signal from a base station (not shown) to a radio circuit 2. The radio circuit 2 amplifies, demodulates and channel decodes the received signal from the antenna 1 and outputs a received control signal to a controller 6 when the received signal is a control signal. The radio circuit 2 also outputs a received voice signal to a voice codec 3 when the received signal is voice signal. On the other hand, when transmitting a signal, the radio circuit 2 channel encodes, modulates and amplifies a transmitting control signal from the controller 6 and outputs a transmitting signal to the antenna 1. The radio circuit 2 also channel codes, modulates, and amplifies a transmitting voice signal from voice codec 3 and outputs the transmitting signal to the antenna 1. The antenna 1 transmits the transmitting signal from the radio circuit 2 to the base station. The voice codec 3 voice decodes the received voice signal from the radio circuit 2 and outputs voice to a speaker 5. The voice codec 3 also voice codes voice from a microphone 4 and outputs the transmitting voice signal to the radio circuit 2. A mobile caller communicates with a counterpart by hearing voice from the speaker 5 and speaking into the microphone 5.

A keypad portion 11, operated by the mobile caller, outputs to the controller 6 a notification setting signal which indicates whether charge notification should be performed or not. The keypad portion 11 also outputs to the controller 6 a threshold charge signal indicating the lowest accrued charge at which to begin charge notification.

The controller 6 controls a display driver 7 for making a display 8 indicate that charge notification is set when charge notification is ordered by the notification setting signal from the keypad portion 11. The controller 6 calculates telephone call charges based on a credit signal, a time rate signal, and a unit charge signal, which are included in the received control signal from the radio circuit 2. When the calculated charge is equal to the threshold charge entered using the keypad portion 11, the controller 6 controls an alarm generation driver 9 for making an alarm generator 10 perform charge notification, e.g., an sound.

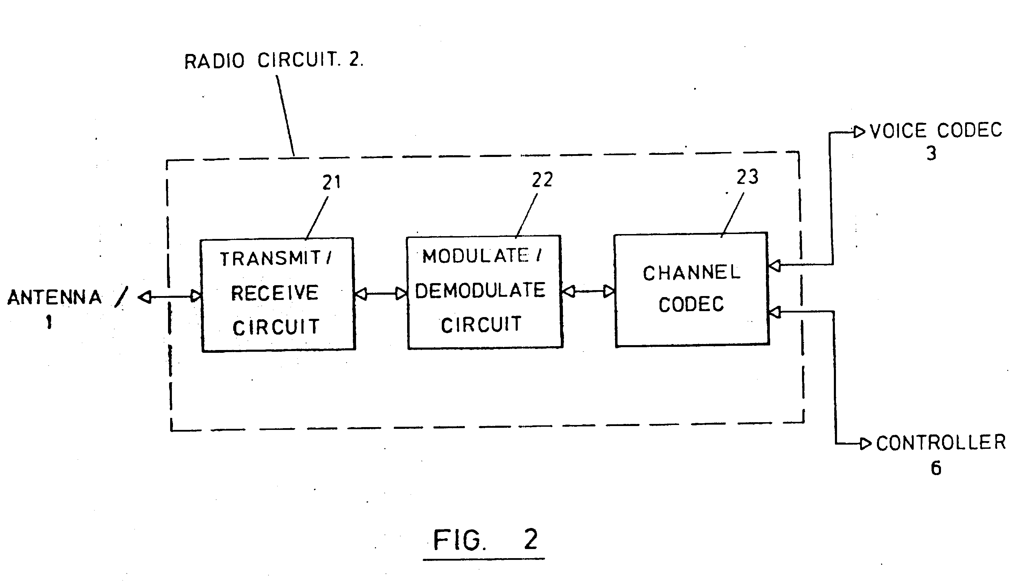

In Fig. 2, a transmit/receive circuit 21 amplifies the received signal from the antenna 1 and supplies an amplified signal to a modulate/demodulate circuit 22. The modulate/demodulate circuit 22 demodulates the amplified signal from the transmit/receive circuit 21 and outputs the demodulated signal to a channel codec 23. The channel codec 23 channel decodes the demodulated signal from the modulate/demodulate circuit 22 and outputs the received control signal to the controller 6 when the demodulated signal is the control signal. The channel codec 23 also outputs the received voice signal to the voice codec 3 when the demodulated signal is the voice signal. On the other hand, when transmitting a signal, the channel codec 23 channel codes the transmitting control signal from the controller 6 and the transmitting voice signal from the voice codec 3 and supplies a channel coded signal to the modulate/demodulate circuit 22. The modulate/demodulate circuit 22 modulates the channel coded signal from the channel codec 23 and supplies a modulated signal to the transmit/receive circuit 21. The transmit/receive circuit 21 amplifies the modulated signal from the transmit/receive circuit 22 and outputs the transmitting signal to the antenna 1.

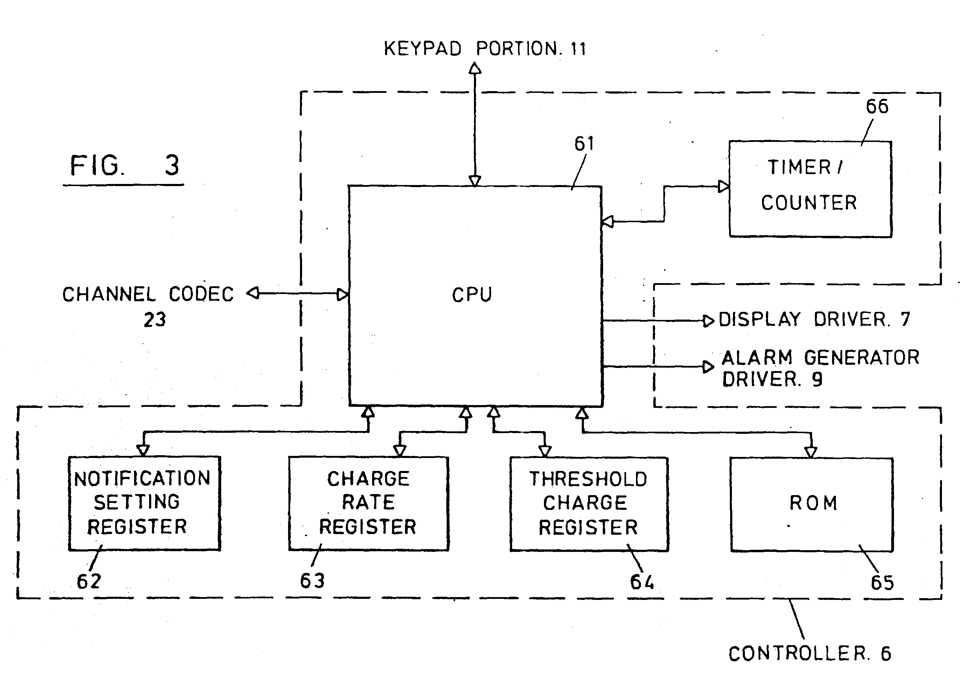

In Fig. 3, the controller 6 includes a CPU 61, a notification setting register 62, a charge rate register 63, a threshold charge register 64, a ROM 65 and a timer/counter 66. The CPU 61 may consist of an integrated circuit "V20" or "78K4".

The CPU 61 receives the notification setting signal from the keypad portion 11 when the mobile caller operates the key pad portion 11, and stores the notification setting signal in a notification setting register 62. After storing the signal, the CPU 61 controls a display driver 7 which causes a display 8 to indicate that charge notification is set if charge notification is desired. Further, the CPU 61 controls the display driver 7 to remove the indication from the display 8 if charge notification is not desired.

The CPU 61 also receive the threshold charge signal from the keypad portion 11 as input by the mobile caller and stores the threshold charge signal to a threshold charge register 64.

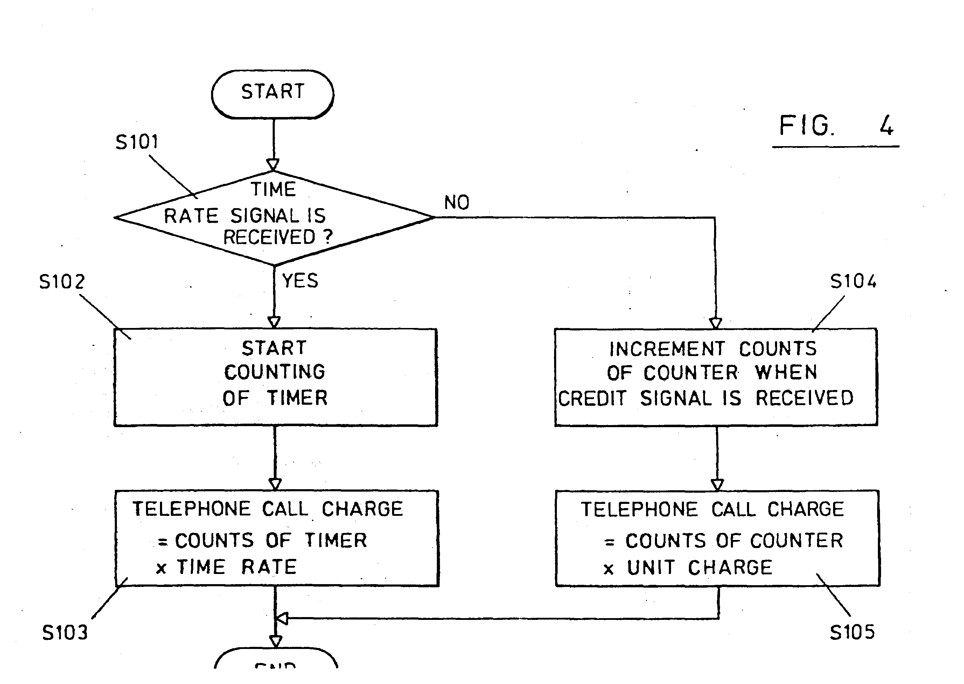

The CPU 61 further receives the received control signal from the channel codec 23 and detects the time rate signal, the unit charge signal, and the credit signal contained in the CONN signal of the received control signal. The CONN signal is prescribed in Japanese mobile radio phone standard "RCR-STANDARD 27". The time rate signal, the unit charge signal, and the credit signal are used for calculating the telephone call charge when charge notification is desired by the mobile caller. In this embodiment, the following two calculation manners are described as examples and these will be explained with respect to Fig. 4.

In the first method, the base station transmits the time rate signal to the mobile radio phone and the CPU 61 detects the time rate signal (YES at STEP S101 of Fig. 4). The detected time rate signal shows the telephone call charge per second and is stored in a charge rate register 63. When a telephone call starts, that is , the CPU 63 detects the ALERT signal from the received control signal from the channel codec 23 or when the CPU 61 outputs the transmitting control signal containing the CONN ACK signal to the channel codec 23 (the ALERT and the CONN ACK signals also are prescribed in Japanese mobile radio phone standard "RCR-STANDARD 27"), the CPU 61 makes a timer/counter 66 start to count elapsed time in seconds (S102). The CPU 61 calculates the telephone call charge using the following equation (S103):

$$\text{telephone call charge} = \text{time rate} \times \text{elapsed time}.$$

In the second method, the base station transmits the credit signal and a unit charge signal to the mobile radio phone but does not transmit the time rate signal. The CPU 61 detects the credit signal and the unit charge signal but does not detect the time rate signal (NO at STEP S101). The detected unit charge signal is transmitted from the base station when the telephone call charge reaches a predetermined charge, e.g., $1. The detected credit signal represents the predetermined charge by which the telephone call charge is incremented upon each transmitted unit charge signal, e.g., $1, and it is stored in a charge rate register 63. When the telephone call starts, the CPU 61 waits to detect the unit charge signal. When the signal is detected, the CPU 61 increments the timer/counter 66 upon each reception of the unit charge signal (S104). The CPU 61 calculates telephone call charge by the following equation (S105) :

telephone call charge = timer/counter value x unit charge.

While processing the calculation, the CPU 61 also determines whether or not the calculated charge is equal to or greater than the threshold charge stored in threshold charge register 64. If so, the CPU 61 activates an alarm generation driver 9 for making an alarm generator 10 perform charge notification. The CPU 61 deactivates the alarm generation driver 9 to turn off charge notification when any of the ten keys of the key pad portion 11 is operated by the mobile caller.

The ROM 62 stores a program to be executed by the CPU 61.

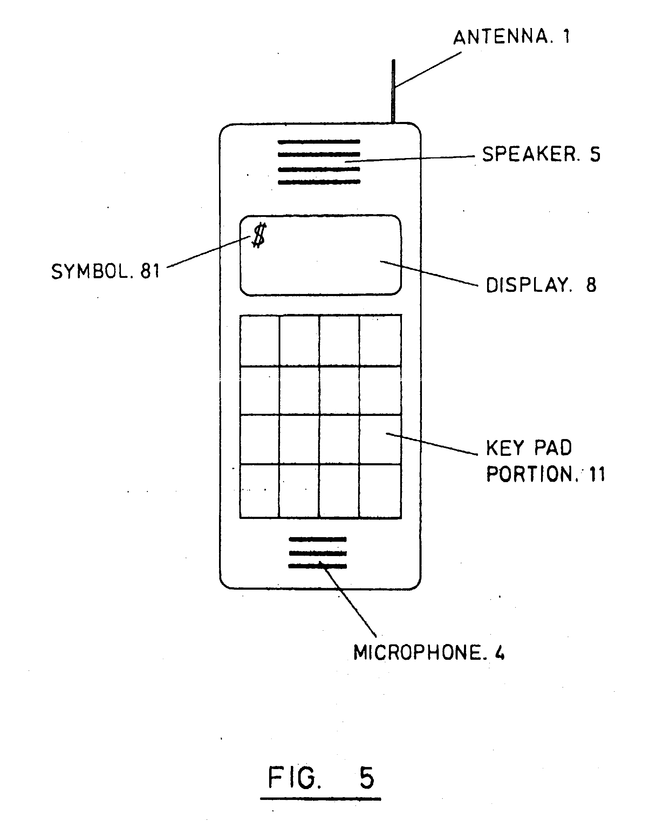

In Fig. 5, the mobile caller operates the key pad portion while viewing the display 8. A symbol "$" 81 indicates that charge information is set.

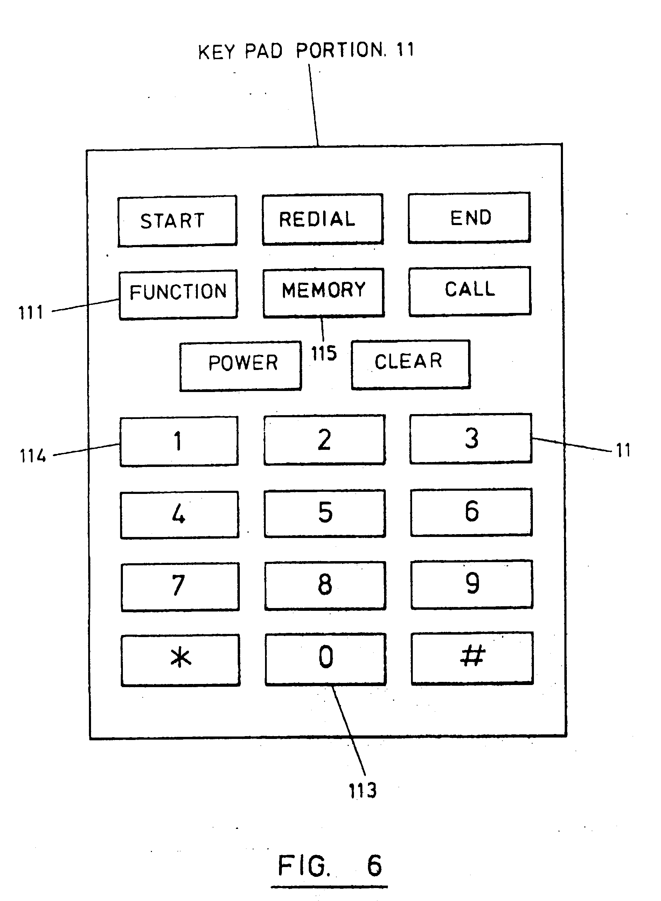

In Fig. 6, the key pad portion 11 has a START key for starting a telephone call, a REDIAL key for redialing the previously dialled number, an END key for terminating a telephone call, a FUNCTION key 111 for performing several functions, a MEMORY key 115 for making the register 62 and 64 store the signal, and a CALL key for setting the mobile radio telephone off-hook or on-hook. The key pad portion 11 also has a POWER key for the power supply, a CLEAR key for correction of letters displayed on the display 8, ten keys from "0" to "9" and control keys "*" and "#".

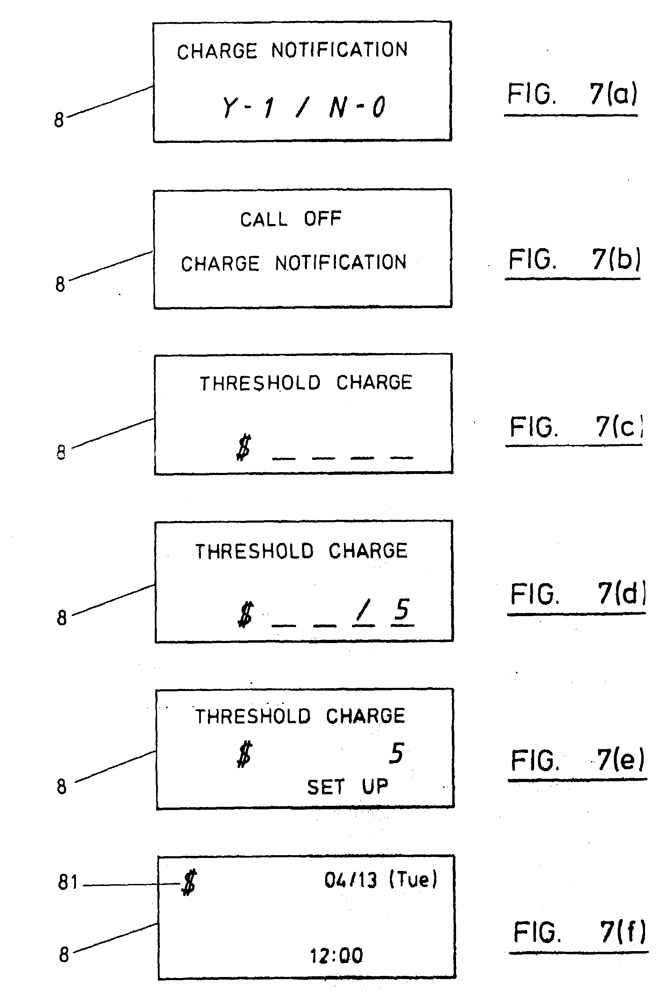

In Figs. 7, in order to enter a "charge notification mode", first of all, the mobile caller pushes the FUNCTION 111 and the keys "1" (reference number 114) and "3" (reference number 112). The key pad portion 11, in response to this operation, generates the notification setting mode starting signal (referred to as "starting signal") and supplies the starting signal to the CPU 61. The CPU 61 receives the starting signal from the key pad portion 11 and causes the display 8 to output "CHARGE NOTIFICATION" as shown in Fig. 7(a). If the mobile caller desires the mobile radio telephone to perform charge notification, he pushes the key "1" 114 to answer "YES" displayed on the display 8. If he does not desire charge notification, he pushes the key "0" 113 to answer "NO". When the key "0" 113 is pushed, the key pad portion 11 outputs the notification setting signal, indicating that charge notification is not to be performed, to the CPU 61, which the CPU 61 stores in the register 62. Further, the CPU 61 makes the display 8 to indicate "CALL OFF CHARGE NOTIFICATION" as shown in Fig. 7(b) and if the mobile caller pushes any of the ten keys after the display shown in Fig. 7(b), notification setting mode is ended.

On the other hand, when the key "1" 114 is selected at the stage of the display shown in Fig. 7(a), the key pad portion 11 outputs the notification setting signal, indicating that charge notification is to be performed, to the CPU 61, which the CPU 61 stores in the register 62. Further, the CPU 61 makes the display 8 indicate "THRESHOLD CHARGE" as shown in Fig. 7(c). After that, the mobile caller pushes, e.g., key "5" in order to decide the threshold charge $5 as shown as Fig. 7(d), and further presses MEMORY 115, when the threshold value is entered. The key pad portion 11, in response to pushing MEMORY 114, outputs the threshold charge signal indicating that the threshold charge is $ 5 to the CPU 61. The CPU 61 stores the signal in the register 64 and makes the display 8 indicate "THRESHOLD CHARGE SET UP" as shown in Fig. 7(e). Finally, the mobile caller pushes any of the keys to terminate the "charge notification setting mode" and display 11 displays the symbol "$" 81, date "04/13 (Tue)" and time "12: 00" as shown in Fig 7(f).

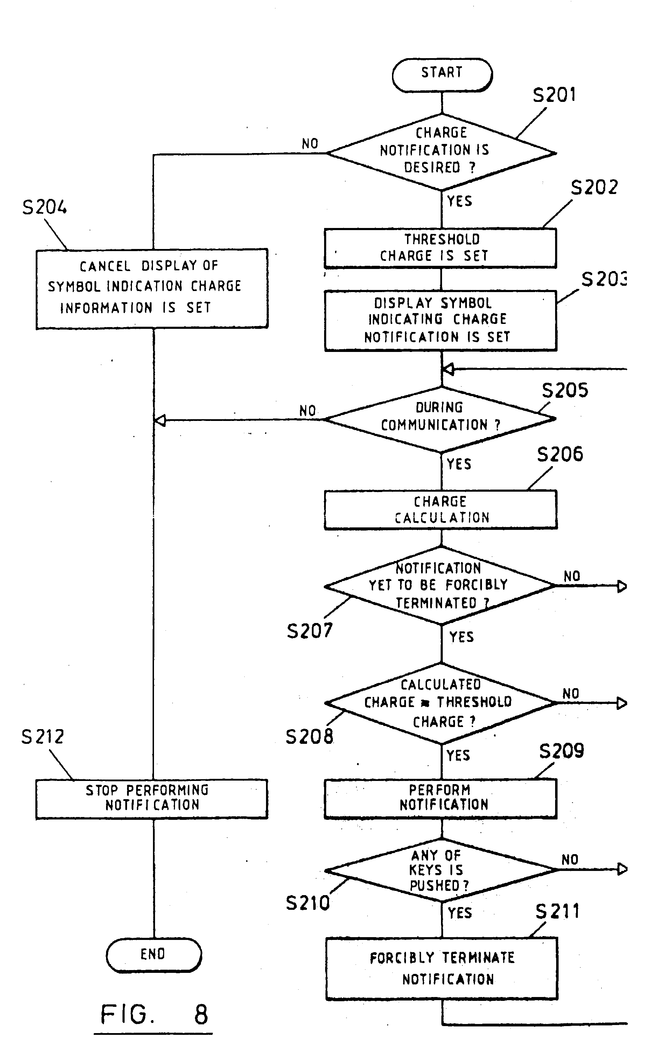

In Fig. 8, the mobile caller selects whether or not to enable charge notification (S201). If the answer is YES in step S201, the mobile caller then determines the threshold charge (S202). After that, CPU 61 determines, based on the state of the notification setting register 62, that the mobile caller is informed of the telephone call charge by charge notification, and the display driver 7 is directed to display a symbol indicating that notification is set, "$" on the display 8 (S203). By displaying this symbol, the mobile caller is notified whether the mobile radio telephone performs charge notification or not.

During a telephone call (S205), the CPU 61 starts the telephone call charge calculation (S206) and no charge notification is generated (S208 to S205) while the calculated telephone call charge is less than the threshold charge. The alarm driver 7 is driven to perform charge notification, e.g., generate the alarm sound from alarm generator 10 (S209), when the calculated charge is equal to or above the threshold charge(S208). The alarm generator 10 stops output of the alarm sound (S211) when the mobile caller pushes any of the keys of the key pad portion 11 while the alarm is sounding (S210).

If none of the keys is pressed in the step S210, the alarm sound is continuously generated for a predetermined time (S210 - S205 - S206 - S207 - S208 -S209).

Also, termination of the call (S205) will stop output of the alarm sound (S212), ending the call procedure (END).

It is to be noted that the threshold charge can be maintained in the threshold charge register 64 until charge notification is canceled or threshold charge is reset.

The following further describes the process by which the alarm sound is generated when the telephone call charge reaches, e.g. $5, In order to output the alarm sound, notification using the alarm sound is selected (S201), and the threshold charge is set to $5 (S202). Once the charge is set, "$" is shown on the display 8 (S203). Since a telephone call is not normally made during charge setting, this process is then terminated (END).

After entering the communication mode (S205), calculation of the telephone call charge begins (S206-S207 - S208 - S209 - ...). When the telephone call charge reaches at least $5 (S208), the alarm sound is output (S210). In order to stop generation of the alarm sound during conversation over the telephone, the mobile caller may press any of the keys (S210 - S211 - S215 - S216 - S217 - S215 ...). The alarm sound can be also stopped by terminating the call (S205 to S212).

In order to disable the alarm for the next call, the mobile caller operates the key pad 11 and the notification setting register 62 stores the notification setting signal indicating that the alarm sound is not to be generated during the telephone call. In this case, the symbol "$" is removed from the display 8 (S1 to S204 and S212).

According to the embodiments of the present invention, since the mobile caller himself/herself can set the telephone call charge of the mobile radio telephone in order to be made aware of the telephone call charge by charge notification, e.g., output of the alarm sound when the telephone call charge exceeds the set amount of money, cost savings can be achieved.

Further, according to the present invention, the ability to turn ON/OFF the alarm sound before starting a telephone call or confirmation of the current set state is possible so as not to automatically produce the alarm sound output every time a call is made, which may annoy to the mobile caller who does not care about the telephone call charge. The mobile radio telephone according to the present invention is therefore suitable for both types of caller, i.e., those who care about the telephone call charge and those who do not.

Sequentially, a description will be given of another embodiment of the present invention.

In this embodiment, the mobile radio telephone transmits a charge rate telephone indicating signal (referred to as indicating signal) to the base station if the mobile caller desires the mobile telephone to perform charge notification.

The register 62, in response to the operation of the key pad portion 11 by the mobile caller, stores the notification setting signal, which indicates that the mobile radio telephone should perform charge notification, if the mobile caller desires that. The CPU 61 supplies the transmitting control signal including SETUP signal, which is prescribed in Japanese mobile radio phone standard "RCR-STANDARD 27" to the channel codec 23 when the mobile radio telephone goes to the hand-off state, if the stored notification setting signal indicates that the mobile radio phone should perform charge notification. The SETUP signal having the indicating signal is transmitted from the antenna 1 as the transmitting signal, which is supplied from transmit/receive circuit 21 through the modulate/ demodulate circuit 22 and channel codec 23, to the base station.

In response to the reception of the transmitting signal, the base station transmits the time rate signal or the credit signal and the unit charge signal to the mobile radio telephone. Thus, the mobile radio telephone can calculate the telephone call charge and judge if the calculated charge is equal to the threshold charge or not. However, the base station does not transmit the time rate signal or the credit signal and the unit charge signal to the mobile radio telephone, if the indicating signal of the SETUP signal contained in the transmitting signal from the mobile radio telephone does not indicate that charge notification should be performed. As described above, in this embodiment, since the base station does not transmit the time rate signal or the credit signal and the unit charge signal to the mobile radio telephone, if the charge notification is not to be performed, the mobile radio telephone calculates the telephone call charge only when the mobile caller desires that, thus, current consumption of the mobile radio phone will be reduced.

In the above described embodiments, the explanation of the present invention is based on the mobile radio telephone standard "RCR-STANDARD 27", however, the present invention is not limited to or by this standard.

Also, the above-mentioned embodiments are described using a mobile radio telephone, however, the present invention is similarly applicable to an automobile telephone or a portable radio phone.

Obviously, numerous additional modifications and variations of the present invention are possible in light of the above teachings. it is, therefore, to be understood that within the scope of the appended claims, the invention may be practiced otherwise than as specifically described herein.

**Claims**

1. A radio telephone comprising:

   a receiving circuit for receiving information concerning telephone calling charges from a base station;
   a calculation circuit for calculating a telephone call charge based on the received information;
   a memory for storing a predetermined threshold charge indicating a minimum call charge for charge notification; and
   a charge notification circuit for performing said charge notification when the calculated telephone call charge is at least as much as said predetermined threshold charge.

2. The radio telephone claimed in claim 1, further comprising:

   a charge notification control circuit for establishing whether said charge notification is performed or not.

3. The radio telephone claimed in claim 2, further comprising:

   a display (8) for displaying a symbol indicating that said charge notification is to be performed when said charge notification control circuit establishes that said charge notification is to be performed.

4. The radio telephone claimed in claim 2 or claim 3, wherein said charge notification control circuit comprises:

> a plurality of keys, operated by user operating the radio telephone, for deciding whether said charge notification is to be performed or not; and
> a register (62) for storing a result of said charge notification decision.

5. The radio telephone claimed in any preceding claim, wherein said charge notification circuit comprises an alarm generator (10) for generating an alarm sound.

6. The radio telephone claimed in any preceding claim, further comprising a presetting circuit for presetting said threshold charge stored in said memory.

7. The radio telephone claimed in claim 6, wherein said presetting circuit comprises:

> a plurality of keys (111,112,114,115) operable by a user operating the radio telephone: and
> a rewrite circuit for rewriting said threshold charge stored in said memory based on the operation of said plurality of keys.

8. A radio telephone comprising:

> a receiving circuit for receiving a time rate signal indicating a telephone call charge rate per predetermined time period;
> a timer for measuring a duration of a telephone call;
> a calculation circuit for calculating said telephone call charge by multiplying said telephone call duration by said call charge rate;
> a memory for storing a predetermined threshold charge; and
> a charge notification circuit for performing charge notification if the calculated telephone call charge is at least equal to said predetermined threshold charge.

9. A radio telephone comprising:

> a receiving circuit for receiving a unit charge signal indicating a predetermined telephone call charge rate and credit signal transmitted each time a telephone call charge is equal to said predetermined telephone call charge rate;
> a counter for counting time of reception of said credit signal;
> a calculation circuit for calculating said telephone call charge by multiplying said counted time by said predetermined telephone call charge rate;
> a memory for storing a predetermined threshold charge; and
> a charge notification circuit for performing charge notification if the calculated telephone call charge is at least equal to said predetermined threshold charge.

10. A radio telephone comprising:

> a receiving circuit for receiving information concerning telephone calling charges from a base station;
> a calculation circuit for calculating a telephone charge based on the received information; and
> notification means for notifying telephone charge information relating to the calculated telephone charge.

FIG. 1

FIG. 2

EP 0 813 332 A1

# FIG. 3

KEYPAD PORTION. 11

TIMER / COUNTER  66

CPU  61

CHANNEL CODEC 23

DISPLAY DRIVER. 7

ALARM GENERATOR DRIVER. 9

NOTIFICATION SETTING REGISTER  62

CHARGE RATE REGISTER  63

THRESHOLD CHARGE REGISTER  64

ROM  65

CONTROLLER. 6

FIG. 4

START

S101

TIME
RATE SIGNAL IS
RECEIVED ?

NO

YES

S102

START
COUNTING
OF TIMER

S104

INCREMENT COUNTS
OF COUNTER WHEN
CREDIT SIGNAL IS RECEIVED

TELEPHONE CALL CHARGE
= COUNTS OF TIMER
x TIME RATE

S103

TELEPHONE CALL CHARGE
= COUNTS OF COUNTER
x UNIT CHARGE

S105

END

EP 0 813 332 A1

ANTENNA. 1

SPEAKER. 5

SYMBOL. 81

DISPLAY. 8

KEY PAD
PORTION. 11

MICROPHONE. 4

FIG. 5

KEY PAD PORTION. 11

FIG. 6

```
┌─────────────────────────┐
│   CHARGE NOTIFICATION   │
│                         │
│      Y - 1 / N - 0      │
└─────────────────────────┘
```
8

FIG. 7(a)

```
┌─────────────────────────┐
│        CALL  OFF        │
│                         │
│   CHARGE  NOTIFICATION  │
└─────────────────────────┘
```
8

FIG. 7(b)

```
┌─────────────────────────┐
│    THRESHOLD  CHARGE    │
│                         │
│      $ _ _ _ _          │
└─────────────────────────┘
```
8

FIG. 7(c)

```
┌─────────────────────────┐
│    THRESHOLD  CHARGE    │
│                         │
│      $ _ _ / 5          │
└─────────────────────────┘
```
8

FIG. 7(d)

```
┌─────────────────────────┐
│    THRESHOLD  CHARGE    │
│      $           5      │
│        SET  UP          │
└─────────────────────────┘
```
8

FIG. 7(e)

```
┌─────────────────────────┐
│  $          04/13 (Tue) │
│                         │
│          12:00          │
└─────────────────────────┘
```
81
8

FIG. 7(f)

START

S201 CHARGE NOTIFICATION IS DESIRED ?

NO

YES

S202 THRESHOLD CHARGE IS SET

S203 DISPLAY SYMBOL INDICATING CHARGE NOTIFICATION IS SET

S204 CANCEL DISPLAY OF SYMBOL INDICATION CHARGE INFORMATION IS SET

S205 DURING COMMUNICATION ?

NO

YES

S206 CHARGE CALCULATION

NOTIFICATION YET TO BE FORCIBLY TERMINATED ?

S207

NO

YES

CALCULATED CHARGE ≈ THRESHOLD CHARGE ?

S208

NO

YES

S212 STOP PERFORMING NOTIFICATION

S209 PERFORM NOTIFICATION

ANY OF KEYS IS PUSHED ?

S210

NO

YES

S211

END

FORCIBLY TERMINATE NOTIFICATION

FIG. 8

14

EP 0 813 332 A1

**European Patent Office**

## EUROPEAN SEARCH REPORT

Application Number

EP 97 30 4086

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 109 401 A (HATTORI KIYOSHI ET AL) 28 April 1992 <br> * the whole document * | 1-10 | H04M15/28 <br> H04M15/00 |
| A | WO 92 16078 A (MEGATREND TELECOMMUNICATIONS) 17 September 1992 <br> * page 6, line 10 - line 15 * <br> * page 15, line 32 - page 16, line 1 * | 1-10 | |
| A | WO 94 28670 A (NOKIA TELECOMMUNICATIONS OY ;TUOHINO MARKKU (FI); SALMELA SEIJA (F) 8 December 1994 <br> * page 4, line 26 - page 5, line 15 * | 1-10 | |
| A | EP 0 629 072 A (TELIA AB) 14 December 1994 <br> * column 2, line 43 - line 53 * | 1-10 | |
| A | PATENT ABSTRACTS OF JAPAN <br> vol. 011, no. 117 (E-498), 11 April 1987 <br> & JP 61 263355 A (NIPPON TELEGR & TELEPH CORP), 21 November 1986, <br> * abstract * | 1-10 | TECHNICAL FIELDS SEARCHED (Int.Cl.6) <br><br> H04M |
| P,X | WO 96 24229 A (MCGREGOR DONALD SCOTT ;MCGREGOR GREGORY M (US)) 8 August 1996 <br> * page 23, line 22 - line 26 * | 1-10 | |

The present search report has been drawn up for all claims

| Place of search | Date of completion of the search | Examiner |
|---|---|---|
| THE HAGUE | 1 October 1997 | Montalbano, F |

EPO FORM 1503 03.82 (P04C01)